# EUROPÄISCHE PATENTSCHRIFT

(11) **EP 1 106 851 B1**
(45) Veröffentlichungstag und Bekanntmachung des Hinweises auf die Patenterteilung: **01.08.2001**
(21) Anmeldenummer: 99124613.3
(22) Anmeldetag: 10.12.1999
(51) Int. Cl.: F16C 29/06

(54) **Wälzlager für Längsbewegungen**
Rolling bearing for longitudinal movements
Palier à roulement pour mouvements longitudinaux

(43) Veröffentlichungstag der Anmeldung: 13.06.2001
(73) Patentinhaber: SKF Linearsysteme GmbH, 97424 Schweinfurt (DE); NACAM France S.A., F-41100 Vendôme (FR)
(72) Erfinder: Geyer, Andreas, 97509 Unterspiesheim (DE); Jeschka, Erwin, 97424 Schweinfurt (DE); Mayer, Uwe, 97702 Münnerstadt (DE); Stahl, Erwin, 97714 Rottershausen (DE); Velde, Henryk, 97440 Werneck (DE); Baudez, Eric, 78180 Montigny Le Bretonneux (FR); Duval, Benoit, 41100 Vendome (FR); Laisement, André, 41290 La Chapelle-Encherie (FR); Onteniente, Manuel Antonio, 08018 Barcelone (ES)
(74) Vertreter: Gosdin, Michael, Dr.

(56) Entgegenhaltungen:
- DE-U- 8 124 025
- DE-U- 8 124 026
- GB-A- 2 100 365
- US-A- 4 005 913
- US-A- 4 128 278
- US-A- 4 227 751
- US-A- 4 952 075
- US-A- 5 584 765

## Beschreibung

Die Erfindung betrifft ein Wälzlager für Längsbewegungen, bestehend aus
- einem Hülsenteil, das eine Aussparung für eine durch das Hülsenteil hindurchtretende Führungsstange aufweist,
- einer Führungsstange, die vorzugsweise im Querschnitt kreisförmig ausgebildet ist,
- mehreren Laufbahnplatten, die in Ausnehmungen im Hülsenteil bzw. in der Führungsstange angeordnet sind, die vorzugsweise gleichförmig über den Umfang des Hülsenteils bzw. der Führungsstange verteilt sind und
- einer Vielzahl von Wälzkörpern, vorzugsweise Kugeln, die zwischen den Laufbahnplatten und der Führungsstange bzw. dem Hülsenteil angeordnet sind.

Wälzlager der gattungsgemäßen Art sind im Stand der Technik hinlänglich bekannt. In der **DE 81 24 026 U1** ist eine derartige drehmomentübertragende Lagerung für Längsbewegungen beschrieben, bei der mindestens eine Laufbahnplatte radial verstellbar in der Gehäusebohrung fixiert ist. Um am Gehäuse keine Eingriffe vornehmen zu müssen, weist die Laufbahnplatte hier axial verlaufende Schneidkanten auf, die sich beim Einpressen des Lagers in die Bohrungsfläche des Gehäuses eingraben. Somit kann sich die Laufbahnplatte zur Laufbahn der Welle hin ausrichten.

Eine ähnliche Lösung ist aus der **DE 81 24 025 U1** bekannt. Damit durch Fertigungstoleranzen und Ungenauigkeiten beim Einbau entstandene Fehler die Laufeigenschaften nicht nachteilhaft beeinflussen, ist dort vorgesehen, daß sich beim Anstellen der Laufbahnplatten eine an der Stirnseite der Gehäuseschraube angeordnete Ringschneide in eine plastisch verformbare Einlage der Laufbahnplatte gräbt, wobei sich diese selbsttätig ausrichten kann.

Des weiteren ist eine gattungsgemäße Linearführung aus der **GB 2 100 365 A** bekannt. Zum Spielausgleich in radialer Richtung sind hier Blattfedern in Ausnehmungen der Laufbahnplatten zwischen diesen und der die Platten umgebenden Hülse eingelegt. Damit wird eine gezielte radiale Elastizität der Laufbahnplatten relativ zur Führungshülse bewerkstelligt.

Mit den vorbekannten Linearführungen kann damit sichergestellt werden, daß sich die Laufbahnplatten bei der Montage des Linearlagers fest in einer gewünschten Position feststellen. Gewisse Fertigungstoleranzen können damit eliminiert werden. Nachteilhaft ist es jedoch bei den vorbekannten Lösungen, daß ein solcher Lagerverbund gar nicht oder nur wenig auf geänderte kinematische Verhältnisse reagieren kann, namentlich, wenn die relative Drehrichtung zwischen Hülsenteil und Führungsstange sich einsatzbedingt ständig ändert. Eine solche Situation ist jedoch beispielsweise für die Linearwälzführung der Lenksäule eines Kraftfahrzeugs typisch.

Der Erfindung liegt daher die **Aufgabe** zugrunde, ein Wälzlager für Längsbewegungen der gattungsgemäßen Art derart weiterzuentwickeln, daß ein flexibles Reagieren der Position der Laufbahnplatten auch bei ständig wechselnder Drehrichtung der Führungsstange relativ zum Hülsenteil gewährleistet ist und daß trotzdem Fertigungstoleranzen in einem gewissen Rahmen ohne negativen Einfluß bleiben. Weiterhin soll sichergestellt werden, daß die Führungseigenschaft der Linearlagerung auch nach langem Gebrauch unverändert bleibt; Materialermüdungen sollen also keinen negativen Einfluß auf die Führungsgenauigkeit der Lagerung haben.

Die **Lösung** dieser Aufgabe durch die Erfindung ist dadurch gekennzeichnet, daß zwischen mindestens einer Laufbahnplatte und der diese aufnehmenden Ausnehmung im Hülsenteil bzw. in der Führungsstange Federmittel angeordnet sind, die in Umfangsrichtung des Hülsenteils wirken.

Die zwischen Laufbahnplatte und Hülsenteil bzw. Führungsstange positionierten Federmittel stellen sicher, daß die Wälzkörper stets mit einer gleichbleibenden Kraft, namentlich durch die von den Federmitteln ausgeübte Federkraft, in die ihnen zukommende Position gedrückt werden, so daß die Wälzlagerung relativ unempfindlich gegen Fertigungstoleranzen ist, die sich systembedingt bei den einzelnen Komponenten der Lagerung nie vermeiden lassen. Dadurch kann jedoch eine relativ preiswerte Fertigung der Lagerung erreicht werden. Des weiteren spielen auch Ermüdungserscheinungen der einzelnen Komponenten der Lagerung keine große Rolle, weil die Federmittel dem Nachgeben einzelner Elemente entgegenwirken können. Schließlich ist auch bei ständiger Drehrichtungsumkehr der Bewegung zwischen Führungsstange und Hülsenteil keine Genauigkeitseinbuße zu verzeichnen, da die Federmittel stets für gleichbleibende Abrollverhältnisse sorgen.

Gemäß einer ersten Weiterbildung ist vorgesehen, daß die Laufbahnplatten in Relation zu den diese aufnehmenden Ausnehmungen im Hülsenteil bzw. in der Führungsstange spielbehaftet toleriert sind. Hierdurch können die erfindungsgemäßen Federmittel besonders effizient zur Wirkung kommen.

Bevorzugt ist vorgesehen, daß weitere Federmittel in radialer Richtung des Hülsenteils wirken.

Es ist denkbar, daß die Federeigenschaft direkt in die Laufbahnplatte integriert ist. Dies kann dadurch bewerkstelligt werden, daß die Federmittel einstückig mit der jeweiligen Laufbahnplatte ausgeführt sind und aus dem Material der Laufbahnplatte bestehen. Die Laufbahnplatte kann hierzu eine spezielle Form erhalten, die so ausgelegt ist, daß sich ein Nachgeben bzw. Durchbiegen der Laufbahnplatte unter Last einstellt, so daß die Platte eine gewisse Federwirkung entfaltet.

Typischerweise wird jedoch ein separates Federmittel zwischen Laufbahnplatte und Führungsstange bzw. Hülsenteil eingelegt. Hierzu ist bevorzugt vorgesehen, daß die Federmittel in einen Raum eingelegt sind, der zwischen der Ausnehmung für die Laufbahnplatte im Hülsenteil bzw. in der Führungsstange und der Laufbahnplatte gebildet wird. Besonders bevorzugt ist vorgesehen, daß auch die Laufbahnplatte eine Ausnehmung aufweist, die den Raum für das Einlegen eines Federmittels bildet.

Als Federmittel kommen bevorzugt gewundene oder gebogene Metallteile, insbesondere Federmetallstreifen in Frage. Die erfindungsgemäße Aufgabe kann bereits dann gelöst werden, wenn die Federmittel nur zwischen einer Laufbahnplatte oder einigen wenigen Laufbahnplatten und der bzw. den diese aufnehmenden Ausnehmung/en im Hülsenteil bzw. in der Führungsstange angeordnet ist bzw. sind.

Durch die vorgeschlagene Ausführung einer Linearlagerung wird erreicht, daß eine besonders hohe Präzision bei der Fertigung der einzelnen Komponenten der Lagerung entbehrlich wird und trotzdem - durch die Federvorspannung - eine präzise Lagerung erfolgen kann. Weiterhin ist besonders vorteilhaft, daß auch bei ständiger Richtungsumkehr der Drehrichtung zwischen Führungsstange und Hülsenteil gute Lagereigenschaften auch langfristig beibehalten werden. Dies macht sich besonders dort vorteilhaft bemerkbar, wo derartige Lagerungen in Linearwälzführungen für die Lenksäulen von Personenkraftwagen zum Einsatz kommen.

In der Zeichnung ist ein Ausführungsbeispiel der Erfindung dargestellt.
- Figur 1: zeigt den Querschnitt durch eine Linearlagerung gemäß einer ersten Ausführungsform, in
- Figur 2: ist eine zur Figur 1 alternative Ausführungsform zu sehen,
- Figur 3: zeigt eine weitere Ausführungsvariante, in
- Figur 4: ist ein Federelement zu sehen, das in Radialrichtung des Hülsenteils Federungseigenschaften erzeugt,
- Figur 5: stellt schließlich ein anderes Federelement dar, das eine Federeigenschaft in Umfangsrichtung des Hülsenteils bewerkstelligt.

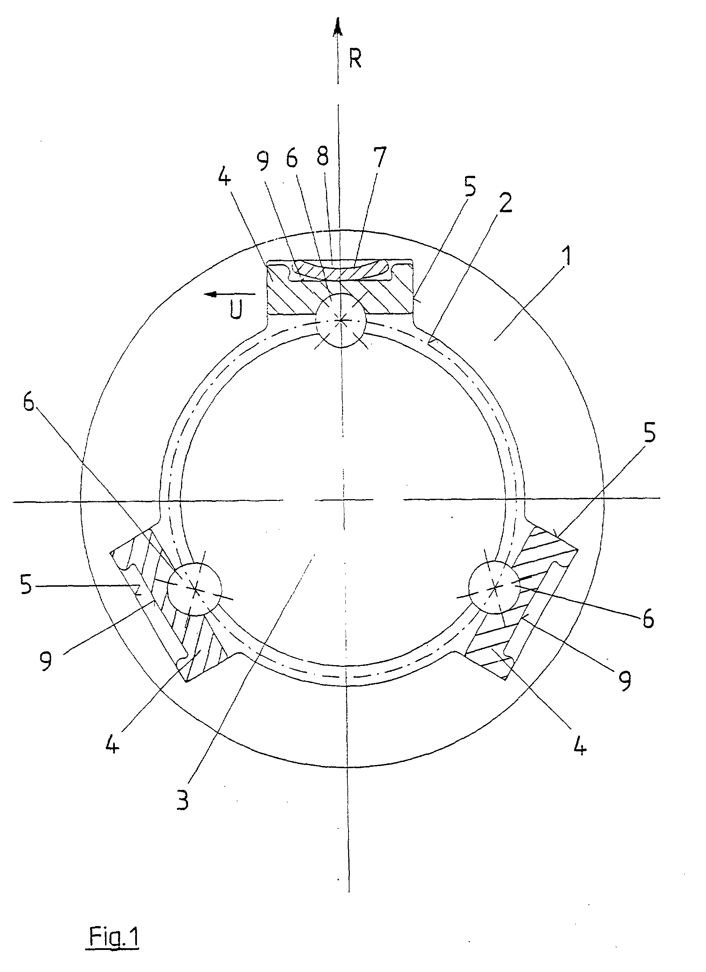

In Figur 1 ist schematisch der Querschnitt durch ein Hülsenteil 1 einer Linearführung zu sehen. Das Hülsenteil 1 hat eine Aussparung 2 für den Durchtritt einer Führungsstange 3. Sowohl Hülsenteil als auch Führungsstange sind im wesentlichen mit zylindrischem Querschnitt versehen. Um die Führungsstange 3 relativ zum Hülsenteil 1 zu lagern, sind in das Hülsenteil 1 Ausnehmungen 5 eingearbeitet, in denen Laufbahnplatten 4 eingesetzt sind. Die Laufbahnplatten 4 weisen eine eingeschliffene Laufbahn für Kugeln 6 auf. Dasselbe gilt für die Führungsstange 3, in die ebenfalls Laufbahnen für die Kugeln 6 eingeschliffen sind. Alternativ dazu ist es auch möglich, die Laufbahnplatte 4 beispielsweise durch Kaltziehen oder Kaltwalzen zu fertigen. Im Ausführungsbeispiel befinden sich drei jeweils um 120° versetzte Laufbahnen über den Umfang der Führungsstange 3 verteilt. Um der Lagerung eine präzise Führungseigenschaft zu verleihen, ist zwischen der oberen Laufbahnplatte 4 und der Ausnehmung 5 für die Laufbahnplatte 4 eine Feder 7 eingelegt. Sie wirkt in radialer Richtung R des Hülsenteils 1. Die Federkraft bewirkt, daß die obere Laufbahnplatte 4 in die Richtung R von der Ausnehmung 5 weg gedrückt wird. Dadurch wird auf die gesamte Linearlagerung, also auf alle drei Führungsbahnen, eine Vorspannkraft ausgeübt, so daß Fertigungstoleranzen zwischen Hülsenteil 1, Führungsstange 3 sowie Ausnehmungen 5 eliminiert werden können; trotz solcher Fertigungstoleranzen gewährleistet das System eine saubere Linearführung.

Es ist nicht unbedingt nötig und in Figur 1 auch nicht dargestellt, daß in die beiden unteren Laufbahnplatten gleichermaßen Federmittel 7 eingelegt sind, was jedoch grundsätzlich möglich ist.

Die im Bereich der oberen Laufbahnplatte 4 eingelegten Federmittel 7 sind in einem Raum 8 angeordnet, der speziell für sie vorgesehen ist. Der Raum 8 wird zum einen durch die Ausnehmung 5 für die Laufbahnplatte 4 begrenzt und zum anderen durch eine Ausnehmung 9, die in die Laufbahnplatte 4 eingearbeitet ist.

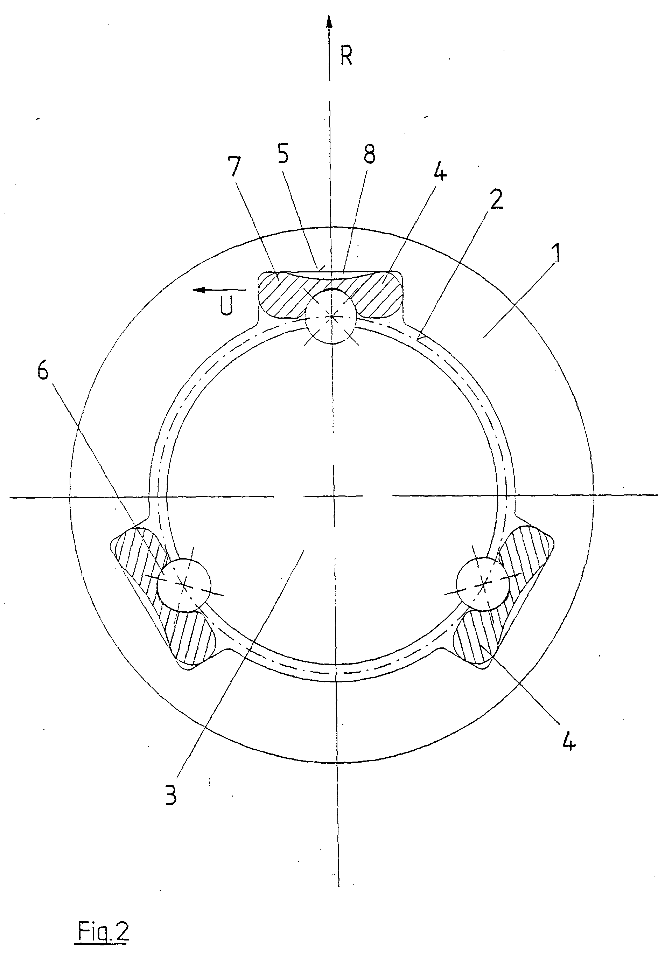

In Figur 2 ist eine alternative Ausführungsform der Erfindung zu sehen, bei der keine separaten Federmittel 7 vorgesehen sind. Vielmehr sind die Laufbahnplatten 4 in ihrer Formgebung so ausgebildet, daß bei der Montage der Lageranordnung eine Durchbiegung der Laufbahnplatte 4 erfolgt, wodurch wiederum eine Federkraft von der Laufbahnplatte 4 auf die Kugeln 6 ausgeübt werden kann. Diese Ausführungsvariante läßt sich in besonders einfacher Weise realisieren.

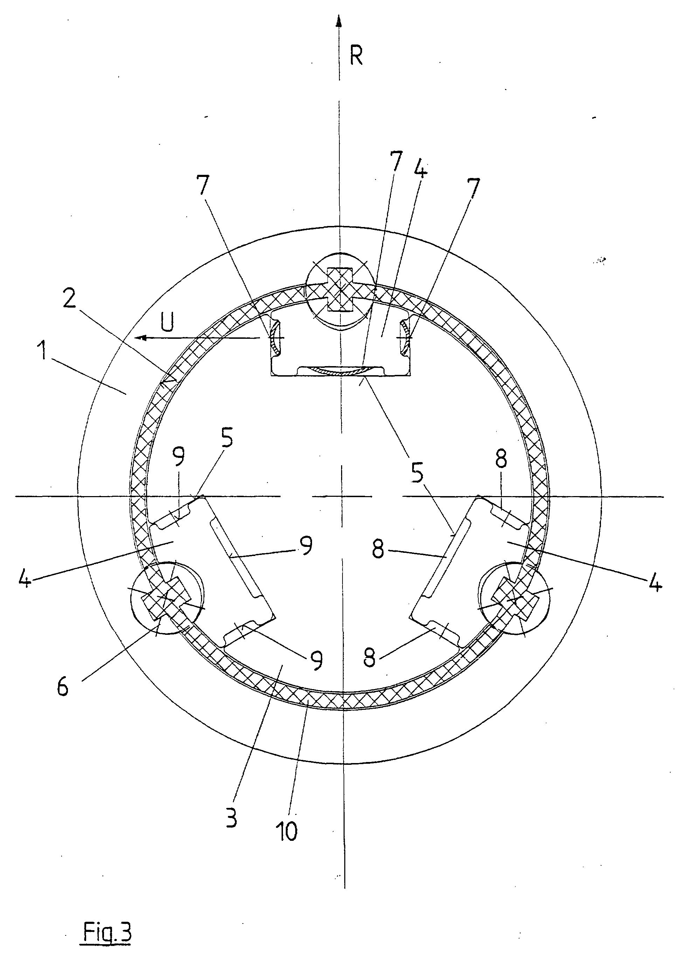

In Figur 3 ist schließlich eine weitere alternative Ausführung dargestellt. Hier sind die Ausnehmungen 5 für die Laufbahnplatten 4 nicht in das Hülsenteil 1, sondern in die Führungsstange 3 eingearbeitet. Wie in der Figur deutlich zu sehen ist, kommen hier nicht nur in radialer Richtung R wirkende Federelemente zum Einsatz, sondern gleichzeitig seitlich angeordnete Federelemente 7, die in Umfangsrichtung U des Hülsenteils 1 wirken. Wie deutlich zu erkennen ist, sind entsprechende Aufnahmeräume 8 für die Federn 7 zwischen Laufbahnplatte 4 und Führungsstange 3 ausgebildet. Auch hier weist nur die obere Laufbahnplatte Federmittel 7 auf, während die beiden unteren Platten ohne solche Federmittel montiert sind. Die Federkraft, die von den Federmitteln 7 ausgeübt wird, die in der oberen Laufbahnplatte angeordnet sind, reicht aus, um die Fertigungstoleranzen des gesamten Systems auszugleichen. Alternativ dazu - dies ist jedoch nicht skizziert - können freilich auch in den entsprechenden Räumen 8 der beiden unteren Laufbahnplatten Federn 7 angeordnet werden. Aus fertigungsökonomischen Gründen weisen bevorzugt auch die unteren Laufbahnplatten 4 die entsprechenden Ausnehmungen 9 auf, wenngleich diese hier nicht benötigt werden; der Fertigungsprozeß ist dadurch jedoch rationalisiert.

Wie in Figur 3 auch angedeutet ist, befindet sich ein Käfig 10 zwischen dem Hülsenteil 1 und der Führungsstange 3, der die Kugeln 6 in bekannter Weise führt.

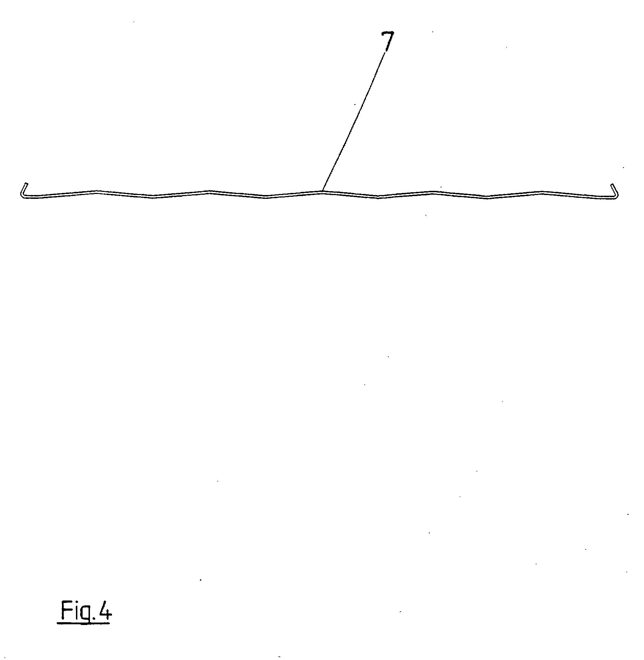

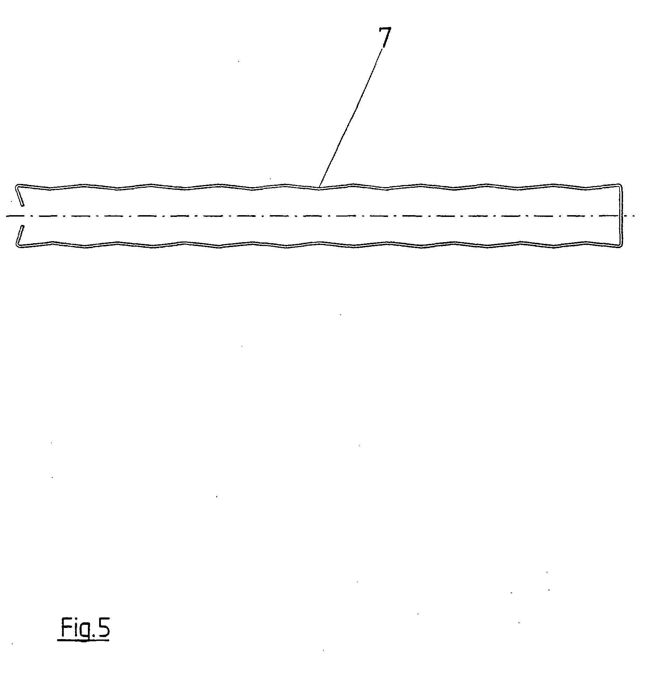

Das erfindungsgemäße Konzept kann besonders wirtschaftlich und funktional realisiert werden, wenn Federmittel 7 zum Einsatz kommen, wie sie in den Figuren 4 und 5 zu sehen sind. Die Federmittel 7 bestehen hier aus einem Federstahlband, das gewunden bzw. gebogen ausgeführt wird, wie es sehr deutlich aus den Figuren hervorgeht. Bei der Montage der Lagereinheit werden die Federmittel 7 in die entsprechenden Räume 8 eingelegt und die entsprechend bestückten Laufbahnplatten 4 montiert. Durch die Zusammenpressung des Verbundes werden die abgewinkelten Bereiche im Federmittel 7 (siehe Figur 4 und 5) gestreckt, wodurch die Federkraft erzeugt wird. Dabei wird ein Federelement 7, wie es in Figur 4 dargestellt ist, bevorzugt in den Raum 8 (siehe Figur 3) eingelegt, der die Federkraft in radialer Richtung R des Hülsenteils 1 erzeugt.

Das Federmittel 7, wie es in Figur 5 zu sehen ist, ist indes als Spange ausgebildet. die die Laufbahnplatte 4 so umfaßt, daß die Federmittel 7 in die beiden seitlichen Aufnahmeräume 8 eingreifen. Dadurch kann erreicht werden, daß durch ein Federmittel 7 gemäß Figur 4 und einer Federspange 7 gemäß Figur 5 alle drei Räume 8 in der Laufbahnplatte 4 mit Federmitteln bestückt sind. Es läßt sich alternativ auch denken, daß die insgesamt drei Federmittel 7 als integrales Bauteil gefertigt werden, die - von drei Seiten die Laufbahnplatte 4 umgreifend - über die Laufbahnplatte 4 gesteckt werden.

### Bezugszeichenliste

- 1: Hülsenteil
- 2: Aussparung im Hülsenteil für Führungsstange
- 3: Führungsstange
- 4: Laufbahnplatte
- 5: Ausnehmung für Laufbahnplatte
- 6: Wälzkörper (Kugel)
- 7: Federmittel
- 8: Raum für Federmittel
- 9: Ausnehmung in der Laufbahnplatte
- 10: Käfig

- R: Radiale Richtung des Hülsenteils
- U: Umfangsrichtung des Hülsenteils

## Patentansprüche

1. Wälzlager für Längsbewegungen, bestehend aus
- einem Hülsenteil (1), das eine Aussparung (2) für eine durch das Hülsenteil (1) hindurchtretende Führungsstange (3) aufweist,
- der Führungsstange (3), die vorzugsweise im Querschnitt kreisförmig ausgebildet ist,
- mehreren Laufbahnplatten (4), die in Ausnehmungen (5) im Hülsenteil (1) angeordnet sind, die vorzugsweise gleichförmig über den Umfang des Hülsenteils (1) verteilt sind, und
- einer Vielzahl von Wälzkörpern (6), vorzugsweise Kugeln, die zwischen den Laufbahnplatten (4) und der Führungsstange (3) angeordnet sind,
**dadurch gekennzeichnet,** daß zwischen mindestens einer Laufbahnplatte (4) und der diese aufnehmenden Ausnehmung (5) im Hülsenteil (1) Federmittel (7) angeordnet sind, die in Umfangsrichtung (U) des Hülsenteils (1) wirken.

2. Wälzlager für Längsbewegungen, bestehend aus
- einem Hülsenteil (1), das eine Aussparung (2) für eine durch das Hülsenteil (1) hindurchtretende Führungsstange (3) aufweist,
- einer Führungsstange (3), die vorzugsweise im Querschnitt kreisförmig ausgebildet ist,
- mehreren Laufbahnplatten (4), die in Ausnehmungen (5) in der Führungsstange (3) angeordnet sind, die vorzugsweise gleichförmig über den Umfang der Führungsstange (3) verteilt sind, und
- einer Vielzahl von Wälzkörpern (6), vorzugsweise Kugeln, die zwischen den Laufbahnplatten (4) und dem Hülsenteil (1) angeordnet sind,
**dadurch gekennzeichnet,**
daß zwischen mindestens einer Laufbahnplatte (4) und der diese aufnehmenden Ausnehmung (5) in der Führungsstange (3) Federmittel (7) angeordnet sind, die in Umfangsrichtung (U) des Hülsenteils (1) wirken.

3. Wälzlager nach Anspruch 1 oder 2, dadurch gekennzeichnet, daß die Laufbahnplatten (4) in Relation zu den diese aufnehmenden Ausnehmungen (5) im Hülsenteil (1) bzw. in der Führungsstange (3) spielbehaftet toleriert sind.

4. Wälzlager nach einem der Ansprüche 1 bis 3, dadurch gekennzeichnet, daß weitere Federmittel (7) in radialer Richtung (R) des Hülsenteils (1) wirken.

5. Wälzlager nach einem der Ansprüche 1 bis 4, dadurch gekennzeichnet, daß die Federmittel (7) einstückig mit der jeweiligen Laufbahnplatte (4) ausgeführt sind und aus dem Material der Laufbahnplatte (4) bestehen.

6. Wälzlager nach einem der Ansprüche 1 bis 4, dadurch gekennzeichnet, daß die Federmittel (7) in einen Raum (8) eingelegt sind, der zwischen der Ausnehmung (5) für die Lautbahnplatte (4) im Hülsenteil (1) bzw. in der Führungsstange (3) und der Lautbahnplatte (4) gebildet wird.

7. Wälzlager nach Anspruch 6, dadurch gekennzeichnet, daß die Federmittel (7) in einen Raum (8) eingelegt sind, der zwischen der Ausnehmung (5) für die Laufbahnplatte (4) im Hülsenteil (1) bzw. in der Führungsstange (3) und einer Ausnehmung (9) in der Laufbahnplatte (4) gebildet wird.

8. Wälzlager nach einem der Ansprüche 1 bis 4 oder 6 bis 7, dadurch gekennzeichnet, daß die Federmittel (7) gewundene oder gebogene Metallteile, insbesondere Federmetallstreifen, sind.

9. Wälzlager nach einem der Ansprüche 1 bis 8, dadurch gekennzeichnet, daß die Federmittel (7) nur zwischen einer Laufbahnplatte (4) oder einigen wenigen Laufbahnplatten (4) und der bzw. den diese aufnehmenden Ausnehmung/en (5) im Hülsenteil (1) bzw. in der Führungsstange (3) angeordnet ist bzw. sind.

## Claims

1. Rolling bearing for longitudinal movements, consisting of,
- a bush part (1), which comprises an opening (2) for a guide rod (3) passing through the bush part (1),
- the guide rod (3), which preferably has a circular cross section,
- a plurality of race plates (4), which are disposed in recesses (5) in the bush part (1) which are preferably uniformly distributed over the circumference of the push part (1), and
- a plurality of rolling bodies (6), preferably balls, which are disposed between the race plates (4) and the guide rod (3),
characterized in
that spring means (7), which act in the circumferential direction (U) of the bush part (1), are disposed between at least one race plate (4) and the recess (5), which accommodates the latter, in the bush part (1).

2. Rolling bearing for longitudinal movements, consisting of
- a bush part (1), which comprises an opening (2) for a guide rod (3) passing through the bush part (1),
- a guide rod (3), which preferably has a circular cross section,
- a plurality of race plates (4), which are disposed in recesses (5) in the guide rod (3) which are preferably uniformly distributed over the circumference of the guide rod (3), and
- a plurality of rolling bodies (6), preferably balls, which are disposed between the race plates (4) and the bush part (1),
characterized in
that spring means (7), which act in the circumferential direction (U) of the bush part (1), are disposed between at least one race plate (4) and the recess (5), which accommodates the latter, in the guide rod (3).

3. Rolling bearing according to claim 1 or 2, characterized in that the tolerances of the race plates (4) in relation to the recesses (5), which accommodate the latter, in the bush part (1) or in the guide rod (3) are determined to take account of play.

4. Rolling bearing according to any one of claims 1 to 3, characterized in that further spring means (7) act in the radial direction (R) of the bush part (1).

5. Rolling bearing according to any one of claims 1 to 4, characterized in that the spring means (7) are integral with the respective race plate (4) and consist of the material of the race plate (4).

6. Rolling bearing according to any one of claims 1 to 4, characterized in that the spring means (7) are inserted in a space (8) which is formed between the recess (5) for the race plate (4) in the bush part (1) or in the guide rod (3) and the race plate (4).

7. Rolling bearing according to claim 6, characterized in that the spring means (7) are inserted in a space (8) which is formed between the recess (5) for the race plate (4) in the bush part (1) or in the guide rod (3) and a recess (9) in the race plate (4).

8. Rolling bearing according to any one of claims 1 to 4 or 6 to 7, characterized in that the spring means (7) are wound or bent metal parts, in particular spring metal strips.

9. Rolling bearing according to any one of claims 1 to 8, characterized in that the spring means (7) are only disposed between one race plate (4) or a few race plates (4) and the recess(es) (5), which accommodate(s) this or these, in the bush part (1) or in the guide rod (3).

## Revendications

1. Palier à roulement pour déplacements longitudinaux comprenant
- un fourreau (1) pourvu d'un passage (2) pour une barre de guidage (3) qui s'étend à travers ledit fourreau (1),
- la barre de guidage (3), qui présente de préférence une section transversale circulaire,
- plusieurs plaques (4) formant chemin de roulement qui sont disposées dans des évidements (5) dans le fourreau (1), de préférence répartis de manière régulière sur le pourtour du fourreau (1) et
- une pluralité de corps roulants (6), de préférence de billes, qui sont disposés entre les plaques (4) formant chemins de roulement et la barre de guidage (3),
caractérisé en ce
qu'un moyen élastique (7) est disposé entre au moins une plaque (4) formant chemin de roulement et l'évidemment (5) dans le fourreau (1) recevant ladite plaque (4) formant chemin de roulement et agit dans la direction périphérique (U) du fourreau (1).

2. Palier à roulement pour déplacements longitudinaux comprenant
- un fourreau (1) pourvu d'un passage (2) pour une barre de guidage (3) qui s'étend à travers ledit fourreau (1),
- une barre de guidage (3), qui présente de préférence une section transversale circulaire,
- plusieurs plaques (4) formant chemin de roulement qui sont disposées dans des évidements (5) dans la barre de guidage (3), de préférence répartis de manière régulière sur le pourtour de la barre de guidage (3) et
- une pluralité de corps roulants (6), de préférence de billes, qui sont disposés entre les plaques (4) formant chemins de roulement et le fourreau (1),
caractérisé en ce
qu'un moyen élastique (7) est disposé entre au moins une plaque (4) formant chemin de roulement et l'évidemment (5) dans la barre de guidage (3) recevant ladite plaque (4) formant chemin de roulement et agit dans la direction périphérique (U) du fourreau (1).

3. Palier à roulement selon la revendication 1 ou 2, caractérisé en ce que les plaques (4) formant chemin de roulement sont tolérancées avec jeu par rapport aux évidements (5) dans le fourreau (1) ou dans la barre de guidage (3).

4. Palier à roulement selon une des revendications 1 à 3, caractérisé en ce que des moyens élastiques (7) supplémentaires agissent dans la direction radiale (R) du fourreau (1).

5. Palier à roulement selon une des revendications 1 à 4, caractérisé en ce que les moyens élastiques (7) sont réalisés d'une pièce avec la plaque (4) formant chemin de roulement concernée et sont formés du même matériau que la plaque (4) formant chemin de roulement.

6. Palier à roulement selon une des revendications 1 à 4, caractérisé en ce que les moyens élastiques (7) sont insérés dans un espace (8) formé entre l'évidemment (5) pour la plaque (4) formant chemin de roulement dans le fourreau (1) ou dans la barre de guidage (3) et la plaque (4) formant chemin de roulement.

7. Palier à roulement selon la revendication 6, caractérisé en ce que les moyens élastiques (7) sont insérés dans un espace (8) formé entre l'évidemment (5) pour la plaque (4) formant chemin de roulement dans le fourreau (1) ou dans la barre de guidage (3) et un évidemment (9) dans la plaque (4) formant chemin de roulement.

8. Palier à roulement selon une des revendications 1 à 4 ou 6 à 7, caractérisé en ce que les moyens élastiques (7) sont des éléments élastiques (7) enroulés en hélice ou cintrés, en particulier sont des bandes de métal à ressort.

9. Palier à roulement selon une des revendications 1 à 8, caractérisé en ce que les moyens élastiques (7) sont disposés seulement entre une la plaque (4) formant chemin de roulement ou quelques plaques (4) formant chemin de roulement et l'évidement ou les évidement (5) recevant celle(s)-ci dans le fourreau (1) ou dans la barre de guidage (3).
